# EUROPEAN PATENT APPLICATION

(11) **EP 2 775 552 A1**
(43) Date of publication of application: **10.09.2014**
(21) Application number: 14156930.1
(22) Date of filing: 27.02.2014
(51) Int. Cl.: H01M 2/10, H01M 10/60

(54) **Battery structure**

(30) Priority: 04.03.2013 GB 201303814
(71) Applicant: McLaren Automotive Limited, Woking Surrey GU 21 4YH (GB)
(72) Inventor: Kent, Peter, Woking, Surrey GU21 4YH (GB); Ward, Richard, Woking, Surrey GU21 4YH (GB)
(74) Representative: Slingsby Partners LLP

(57) **Abstract**

A jacket for a multi-cell battery pack, the jacket having: outer walls defining a chamber for coolant fluid; a mid-wall partitioning the jacket into two regions; cell holders for holding the cells in place in the jacket so that each cell extends through the mid-wall; an inlet for coolant fluid on a first side of the mid-wall; and an outlet for coolant fluid on a second side of the mid-wall; the jacket defining a fluid path for the coolant fluid between the inlet and the outlet, the fluid path passing each cell of a set of the cells on both the first and second sides of the mid-wall.

## Description

This invention relates to battery structures.

High-capacity batteries are typically made from a number of individual cells which are bundled together physically, and interconnected electrically, to form a single battery pack. This arrangement has the advantages of yielding a package that can have a high capacity whilst being made from mass-produced individual cells.

When a battery is being charged or discharged, heat can be generated in the battery. If the battery is allowed to become too hot then its lifetime can be reduced, and at more extreme temperatures it may suffer major damage. One way to limit overheating is to regulate the current flow to prevent the temperature of the battery from exceeding a pre-set limit. This can be practical in some operating conditions , but in other situations this is less acceptable. For example, in a hybrid vehicle it is desirable to make the maximum use of any kinetic energy that is available for charging the battery. An alternative is to provide an arrangement for cooling the battery. For example, US 2012/0018238 discloses a battery for a vehicle in which a cooling pack is installed near battery cells. US 2011/0048066 discloses a cooling jacket which has a set of receptacles for receiving battery cells. Cooling fluid circulates through the jacket.

Provided the cells of a battery pack are adequately connected electrically, they can be expected to heat up equally. Because of that, some benefit can be had from cooling the battery pack in any manner; but to maximise the benefit of cooling it is desirable for the cells to be cooled as evenly as possible. Otherwise, performance may be limited by over-temperature in one of the cells when other cells might still be at an acceptable temperature.

If a battery pack is to be used in a vehicle, such as an automobile or aircraft, it is desirable for the battery to be as light as possible. Cooling arrangements that introduce excess weight are undesirable.

There is a need for a construction for a battery pack that can provide for uniform cooling without a substantial weight penalty.

According to the present invention there is provided a jacket for a multi-cell battery pack, the jacket having: outer walls defining a chamber for coolant fluid; a mid-wall partitioning the jacket and/or the chamber into two regions; cell holders for holding the cells in place in the jacket so that each cell extends through the mid-wall; an inlet for coolant fluid on a first side of the mid-wall; and an outlet for coolant fluid on a second side of the mid-wall; the jacket defining a fluid path for the coolant fluid between the inlet and the outlet, the fluid path passing each cell of a set of the cells on both the first and second sides of the mid-wall.

The jacket may be configured such that, for each cell of the set, the part of the fluid path from the inlet to a first passing of that cell is an analogue of the part of the fluid path from the second passing of that cell to the outlet. The first of those paths may be symmetrical with the other about an axis or plane through the mid-wall. Preferably the first of those paths is a mirror image of the second about the mid-wall.

The cell holders may be tubes that extend through the intermediate wall. The tubes may be of circular cross-section.

The inlet and the outlet may be located at one end of the jacket. The intermediate wall may seal one region of the jacket from the other with the exception of one or more ports extending through the intermediate wall at the end of the jacket opposite the inlet and the outlet.

The set may consist of all the cells passed by the fluid path between the inlet and the outlet.

The jacket may comprise a second inlet, a second outlet and a divider extending in a direction transverse to the intermediate wall, the divider dividing the interior of the jacket into two fluid zones such that a second fluid path through the jacket, separate from the first fluid path, is defined between the second inlet and the second outlet. There could be multiple such dividers, together dividing the interior of the jacket into multiple fluid zones.

The cell holders may be arranged for holding cylindrical cells in a hexagonal close packed configuration. There may be spacing between adjacent cells. The or each fluid path may serve a set of cells whose width is two cells in the plane of the hexagonal close packing (i.e. the width of one repeat unit of the hexagonal close packing pattern). Each cell may be elongate in a direction transvers to the mid-wall.

According to a second aspect of the invention there is provided a method for forming a sealed jacket for a multi-cell battery pack, the jacket having a set of exterior walls defining the exterior of the jacket and a plurality of tubes, each tube running from an opening on the first exterior wall to an opening on a second exterior wall opposite the first exterior wall, the method comprising: assembling the walls and the tubes; and joining the walls and the tubes together by dip brazing.

The jacket of such a method may be a jacket as set out above.

The present invention will now be described by way of example with reference to the accompanying drawings. In the drawings:
Figure 1 shows a battery pack with cells fitted.
Figure 2 shows the battery pack of figure 1 with the cells removed.
Figure 3 shows an exploded view of the battery pack of figure 1 without the cells.
Figure 4 illustrates the coolant path in the battery pack of figure 1.
Figure 5 shows the battery pack of figure 1 as part of a battery installation for a vehicle.

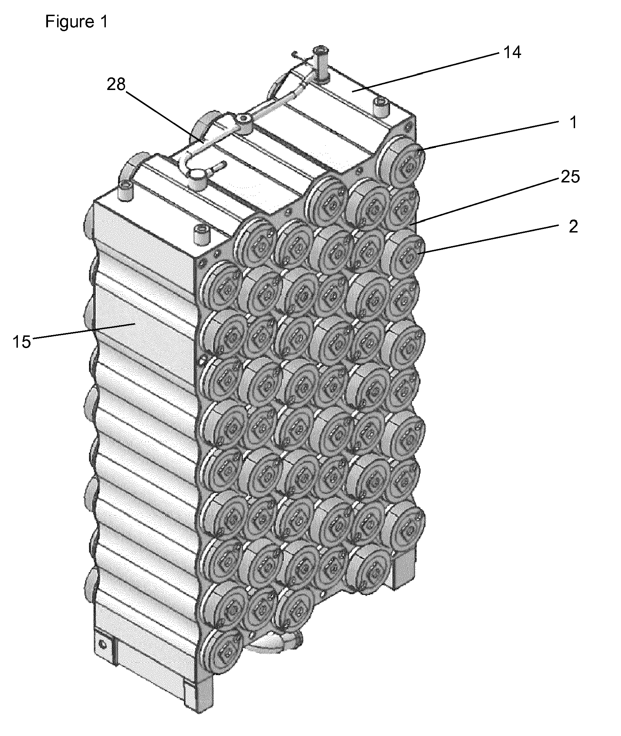

The battery pack of figure 1 comprises a set of individual electrical cells 1 which can be connected together electrically to allow them to be charged and discharged together. The cells are encased in a jacket. The jacket is formed of sheets of metal which are joined together by a dip-brazing process. The jacket serves the purpose of holding the cells together structurally and also of defining paths for coolant to circulate through the battery pack so as to evenly cool the cells.

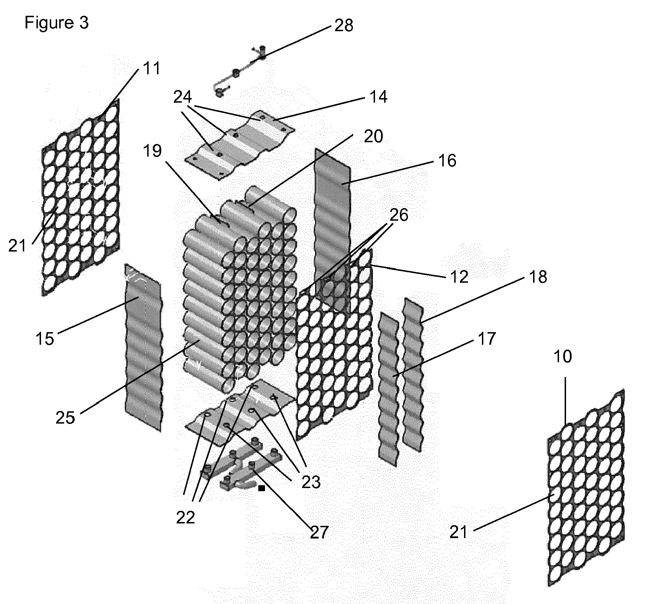

The structure of the jacket is best understood with reference to figure 3. The jacket has a front wall 10, a rear wall 11, a mid-wall 12, a bottom wall 13, a top wall 14, a left side wall 15, a right side wall 16, four separator walls 17-20 and a set of cell holders 25. Each of the walls is made from a sheet of material. The sheets can be stamped/pressed into shape to form the walls. The cell holders are tubular. They can be made from sheet material rolled into a loop and joined along the resulting seam to form a tube, by drawing or by any other suitable method. The walls and the cell holders can be formed of a plastics material or a metallic material such as aluminium. It is preferred that the cell holders are formed of a material having good thermal conductivity.

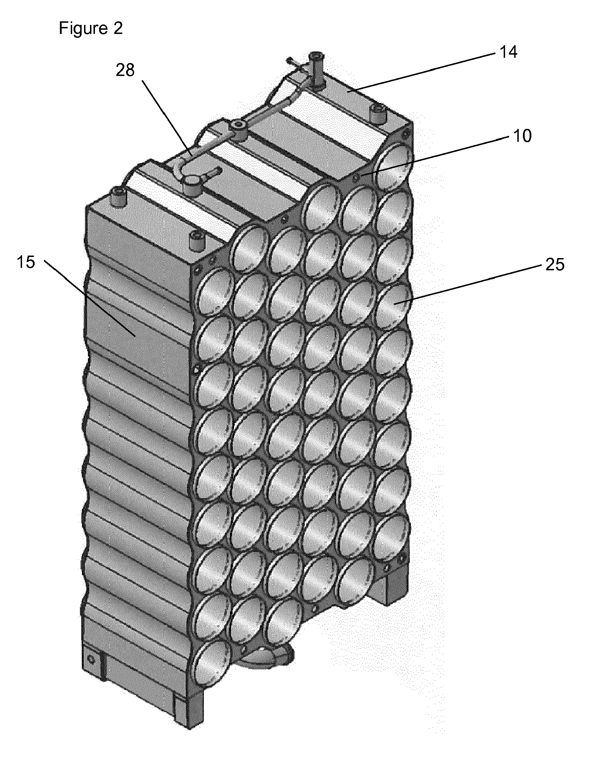

The periphery of the jacket is defined by the front, rear, top, bottom and side walls, which together form a box structure. The front and rear walls have cut-outs 21. Each cut-out is shaped and sized so as to abut the rim of a respective one of the cell holders 25. The front rims of the cell holders may abut the edges of the cut-outs in the front wall 10 or extend beyond them away from the jacket's interior. The rear rims of the cell holders may abut the edges of the cut-outs in the rear wall 11 or extend beyond them away from the jacket's interior. Once the outer walls 10, 11, 13, 14, 15 and 16 are joined together around their edges and to the cell holders the jacket forms a fluid-tight enclosure with the exception of inlet and outlet ports 22, 23 and bleed ports 24. This is best seen in figure 2. The locations of the cell holders are fixed by the locations of the cut-outs 21 in the front and rear walls 10, 11. The cut-outs are located so that the cell holders are close together but not touching each other, so that fluid in the jacket can flow between and in contact with the cell holders.

When the jacket is in use, cells 1 are inserted in the cell holders 25, as illustrated in figure 1. Each cell may be a sealed charge-storing unit having electrical contacts on its exterior. Coolant circulating in the jacket can then cool the cells by conduction through the cell holders. Thermal paste is used to secure the cells and provide a conductive path between the cells and cell holders.

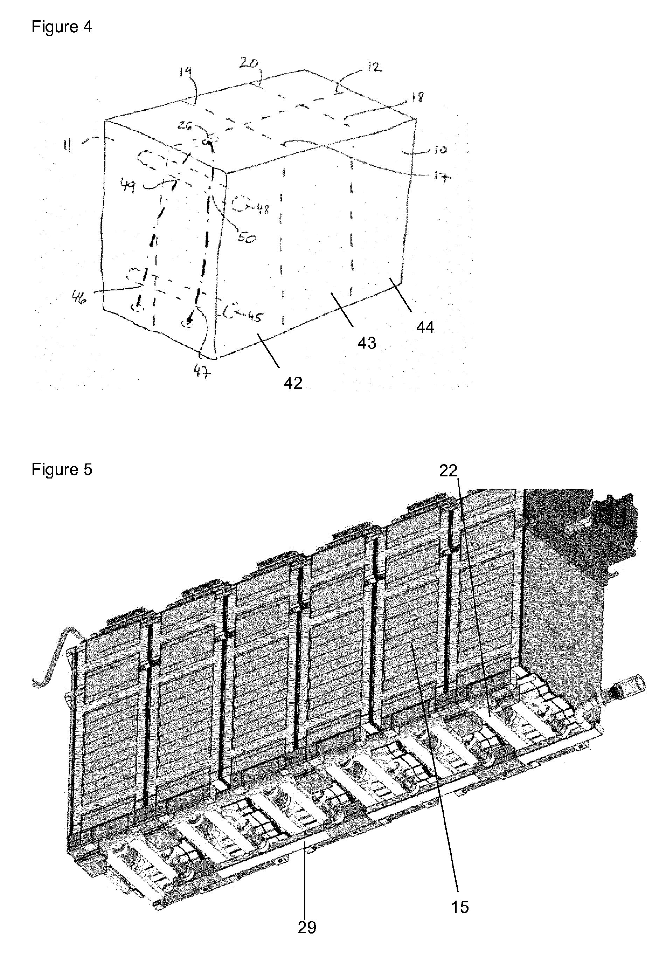

Fluid circulation paths within the jacket are defined by the mid-wall 12 and the separator walls 17-20. Like the front and rear walls, the mid-wall has cut-outs 21 which are sized and shaped to receive the cell holders. The mid-wall is disposed mid-way between and parallel to the front and rear walls, and is joined to the top, bottom and side walls and to the cell holders mid-way along their lengths. In this way the mid-wall divides the interior of the jacket into a front part and a rear part. (See figure 4). Those parts are isolated from each other by the mid-wall with the exception of slots 26. (See figure 3). Slots 26 extend through the mid-wall at its end opposite the inlet and outlet ports 22, 23 and allow fluid communication through the mid-wall between the front and rear parts. The separator walls are disposed between and parallel to the side walls. Two of the separator walls 17, 18 are disposed between the mid-wall and the front wall. They are joined to the mid-wall, the front wall and the top and bottom walls. Two of the separator walls 19, 20 are disposed between the mid-wall and the rear wall. They are joined to the mid-wall, the rear wall and the top and bottom walls. In this way pairs of separators (17 and 19 on the one hand and 18 and 20 on the other) act together as dividers to divide the interior of the jacket into three separate fluid zones 42, 43, 44. Within the jacket, fluid cannot communicate between zones 42, 43 and 44. Each of the slots 26 in the mid-wall is located in a respective one of the zones so that fluid can communicate through the slots between the front and rear parts of each zone.

The bottom wall 13 is at the opposite end of the jacket from slots 26. The bottom wall contains a set of inlet holes 22 and a set of outlet holes 23. The inlet holes are located so that one inlet hole communicates with each of the zones 42, 43, 44 between the mid-wall 12 and the rear wall 11. The outlet holes are located so that one outlet hole communicates with each of the zones 42, 43, 44 between the mid-wall 12 and the front wall 10. This configuration enables fluid to circulate through the jacket along the paths illustrated in figure 4. In each of the zones 42, 43, 44 the fluid enters the jacket through one of the inlets 22, passes up the rear part of the zone through a passageway defined by the rear wall 11, the mid-wall 12 and whichever of the left wall 15, the right wall 16 and the rear separator walls 19, 20 bound the sides of the rear part of the zone in question. At its upper end that passageway is bounded by top wall 14, but the fluid can pass through the respective one of the slots 26 in the mid-wall into the front part of the zone in question. Then the fluid can flow to one of the outlets 23 through a passageway defined by the front wall 10, the mid-wall 12 and whichever of the left wall 15, the right wall 16 and the front separator walls 17, 18 bound the sides of the front part of the zone in question. The fluid can then exit the jacket through the respective outlet.

When cooling fluid is circulating through the jacket in the manner described above, each cell holder is exposed to fluid in both the rear part of the jacket and the front part of the jacket. For example, cell holder 45 (figure 4) is exposed to fluid in the rear part of the jacket at 46 and in the front part of the jacket at 47. Cell holder 48 is exposed to fluid in the rear part of the jacket at 49 and in the front part of the jacket at 50. The overall fluid path in one of the zones is shown at 51 in figure 4. Partial fluid paths can be defined:
(a) in the rear part of the jacket from the inlet via any cell holder to the cross-over slot 26; and
(b) in the front part of the jacket from the cross-over slot via that cell holder to the outlet.

Each partial path serves a block of cells by passing and contacting the cell holders of those cells. Each block has an extent perpendicular to the end walls of the battery pack. The partial fluid paths are symmetrical about the mid-wall. As a result, when there is a substantial difference between the inlet coolant temperature and the cell temperature throughout the jacket, it can be expected that the average of the temperature of the cooling fluid to which a cell holder is exposed in the rear part of the jacket and the temperature of the cooling fluid to which a cell holder is exposed in the front part of the jacket is substantially the same for all the cell holders. The temperature of the coolant when it reaches a point at which it passes a cell will depend on the inlet temperature of the coolant and the energy transfer to the coolant between the inlet and the point in question. As an example, if the inlet coolant temperature is 30°C and the outlet coolant temperature is 50°C the cell holder 45 might be exposed to coolant at 32°C at point 46 and at 48°C at point 47 (average coolant temperature = (32°C+48°C)/2 = 40°C) whereas cell holder 48 might be exposed to coolant at 38°C at point 49 and at 42°C at point 50 (average coolant temperature = (38°C+42°C)/2 = 40°C). Since thermal conductivity within a cell can be expected to be good, arranging the circulation paths in this way allows all the cells to be maintained at a uniform temperature irrespective of their location within the jacket.

In the jacket of the figures, each of the zones 42, 43, 44 has a single slot 26. There could be multiple openings for communication between the parts of a zone. Those openings could be located exclusively at the ends of the zone opposite the inlet and the outlet.

The inlet and outlet ports 22, 23 can be connected to a manifold 27 and via that to a coolant circuit. The coolant circuit can include a pump for forcing coolant to circulate in the circuit and a heat exchanger for cooling the coolant, for instance by releasing heat to ambient air. The coolant could circulate by convection, in which case no pump would be required.

To permit the jacket to be filled with coolant when the battery is commissioned, bleed holes 24 for air are provided at the top of the jacket. The bleed holes can be connected to a bleed pipe 28 which allows multiple zones to be bled simultaneously. The bleed holes and/or the bleed pipe can be sealed once the battery is in use, or the bleed pipe may be used as a running bleed.

As described above, the walls of the jacket are joined to each other and to the cell holders in a fluid-tight manner around their peripheries. This could be done by a number of methods, for example by welding the elements of the jacket together. The jacket could be moulded or cast as a single unit. However, it has been found particularly efficient to form the walls and the cell holders individually and then to join them together by dip brazing. In dip brazing the parts to be joined are assembled and braze is applied at the intended joins. Then the assembly is immersed in a hot bath. The hot bath melts the braze and the braze flows by capillary action along the interfaces between the parts. The assembly is then removed from the bath and the braze cools, setting the joints between the parts. Dip brazing can permit the jacket to be assembled efficiently and so as to be reliably fluid-tight whilst permitting the walls of the jacket and especially of the cell holders to be made of relatively thin material. The walls of the jacket can be fitted with tabs to allow them to be clipped together prior to brazing.

Once the jacket has been assembled, the cells can be inserted in the cell holders. As well as providing cooling for the cells, the jacket can serve as the structural support for the cells. The jacket can be the sole means of holding the cells in the jacket in place relative to each other. The cell holders can be sized so as to snugly receive the cells; then no additional fixings may be needed to hold the in place. Thermal paste is used to improve thermal conductivity. The cell holders permit the ends of the cells to be exposed once the cells are inserted in the cell holders. The electrical terminals 2 of the cells can be located at the ends of the cells. The cells can then be connected electrically after they have been inserted in the cell holders. Figure 5 shows a battery installation for use in a vehicle. In the battery installation six jackets as described above, with their cells, are attached together physically. The cells can be interconnected electrically as required, for example by connecting the cells within a jacket to positive and negative terminations on that jacket, and then connecting he positive terminals of the jackets together with a first busbar, and connecting the negative terminals of the jackets together with a second busbar. The cells of a jacket could be connected in series and/or parallel. To make it easier to interconnect the cells, some could present their electrical terminals on one side of the jacket and some on the other. The manifolds 27 of each jacket can be connected to a common coolant supply/return pipe 29 as shown in figure 5.

In the jacket described above, the cell holders take the form of tubes extending from openings on one exterior wall to the jacket to corresponding openings on the other wall of the jacket. The openings match in shape and size the interior profile of the tubes. Other arrangements are possible. For example, the cell holders could be threaded or provided with clips to hold the cells in place, or the cells themselves could be attached integrally to the front, rear and mid-walls, in which case the cells would be located by the openings in the walls to which the cells attach, and those openings could be considered as cell holders.

The jacket shown in the figures is configured for accommodating cells that are circularly cylindrical. The cell holders 25 are arranged in a hexagonally close packed manner so as to achieve a high density of cells in the battery pack, albeit that each cell holder is spaced slightly from its neighbours so as to permit coolant to flow between them. Each zone 42, 43, 44 serves a column of cells that extends parallel to the primary directions of flow in the fluid paths. Each column has an extent of two cells in the plane of the close packing. By dividing the battery pack into narrow columns in this way, the possibility of non-uniform cooling of some of the cells due to differences in flow patterns across the plane of close packing can be reduced. The separators 17-20 are located between cells, and extend out of the plane of the close packing. To permit the separators to fit between the close-packed cells the separators are corrugated.

In the jacket described above, the walls are arranged in a generally perpendicular fashion. The walls could be arranged obliquely. The walls need not be generally flat. In the jacket described above the mid-wall 12 runs the full width of the jacket and the each of the separators 17-20 runs part-way across the depth of the jacket. Alternatively, the separators could run the full depth of the jacket and the mid-wall could be formed in multiple parts that run between the separators.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

## Claims

1. A jacket for a multi-cell battery pack, the jacket having:
outer walls defining a chamber for coolant fluid;
a mid-wall partitioning the jacket into two regions;
cell holders for holding the cells in place in the jacket so that each cell extends through the mid-wall;
an inlet for coolant fluid on a first side of the mid-wall; and
an outlet for coolant fluid on a second side of the mid-wall;
the jacket defining a fluid path for the coolant fluid between the inlet and the outlet, the fluid path passing each cell of a set of the cells on both the first and second sides of the mid-wall.

2. A jacket as claimed in claim 1, the jacket being configured such that, for each cell of the set, the part of the fluid path from the inlet to a first passing of that cell is an analogue of the part of the fluid path from the second passing of that cell to the outlet.

3. A jacket as claimed in claim 1 or 2, wherein the cell holders are tubes that extend through the intermediate wall.

4. A jacket as claimed in any preceding claim, wherein the inlet and the outlet are located at one end of the jacket and the intermediate wall seals one region of the jacket from the other with the exception of one or more ports extending through the intermediate wall at the end of the jacket opposite the inlet and the outlet.

5. A jacket as claimed in any preceding claim wherein the set consists of all the cells passed by the fluid path between the inlet and the outlet.

6. A jacket as claimed in any preceding claim, wherein the jacket comprises a second inlet, a second outlet and a divider extending in a direction transverse to the intermediate wall, the divider dividing the interior of the jacket into two fluid zones such that a second fluid path through the jacket, separate from the first fluid path, is defined between the second inlet and the second outlet.

7. A jacket as claimed in any preceding claim, wherein the cell holders are arranged for holding cylindrical cells in a hexagonal close packed configuration with spacing between adjacent cells.

8. A jacket as claimed in claim 7, wherein the or each fluid path serves a set of cells whose width is two cells in the plane of the hexagonal close packing.

9. A method for forming a sealed jacket for a multi-cell battery pack, the jacket having a set of exterior walls defining the exterior of the jacket and a plurality of tubes, each tube running from an opening on the first exterior wall to an opening on a second exterior wall opposite the first exterior wall, the method comprising:
assembling the walls and the tubes; and
joining the walls and the tubes together by dip brazing.

10. A method as claimed in claim 9, wherein the jacket is a jacket as claimed in any of claims 1 to 8.
